# EUROPÄISCHE PATENTANMELDUNG

(11) **EP 2 420 317 A1**
(43) Veröffentlichungstag der Anmeldung: **22.02.2012**
(21) Anmeldenummer: 10173041.4
(22) Anmeldetag: 17.08.2010
(51) Int. Cl.: B01J 37/00, B01J 37/02, B01J 2/12, B01J 35/00, B01J 13/04

(54) **Verfahren zur Herstellung von Schalenkatalysatoren**

(71) Anmelder: Evonik Degussa GmbH, 45128 Essen (DE)
(72) Erfinder: Gaudschun, Kurt-Alfred, 45739 Oer-Erkenschwick (DE); Seel, Andre, 45768 Marl (DE); Fuchs, Manfred, 63755 Alzenau (DE); Schimmer, Klaus, 69221 Dossenheim (DE)

(57) **Zusammenfassung**

Verfahren zur Herstellung von Trägerkatalysatoren durch Aufsprühen einer Imprägnierlösung auf eine Vielzahl von Katalysatorträgern, wobei die Vielzahl der geformten Katalysatorträger als Schüttung in einer zylinderförmigen Trommel vorliegt, wobei die zylindrische Trommel Gasdurchtrittsöffnungen aufweist und wobei die zylindrische Trommel während des Aufsprühens eine Drehbewegung um die Längsachse ausführt und dabei ein Gasstrom durch die Gasdurchtrittsöffnungen in das Trommelinnere geführt wird und die Schüttung der geformten Katalysatorträger durchströmt.

## Beschreibung

Die Erfindung betrifft ein Verfahren zur Herstellung von Trägerkatalysatoren durch Imprägnierung von geformten Trägermaterialien.

Bei der Herstellung von Trägerkatalysatoren über Imprägnierung werden geformte Katalysatorträgermaterialien verwendet, die kugel-, zylinder-, granulat- oder partikelförmig ausgebildet sein können und die bevorzugt eine poröse Struktur mit inneren Oberflächen aufweisen, wobei die inneren Oberflächen in ihrer Größe deutlich über der geometrischen Oberfläche liegen.

Typische Katalysatorträgermaterialien sind Al₂O₃, SiO₂, TiO₂ oder Aktivkohle. Bei der Imprägnierung werden die geformten Katalysatorträgermaterialien mit einer Lösung getränkt, die zum Beispiel die Precursoren der katalytisch aktiven Komponenten enthalten kann. Dadurch können die Trägeroberflächen mit katalytisch aktivem Material beladen werden.

Als katalytisch aktive Komponente können Edelmetalle wie beispielsweise Palladium, Platin, Ruthenium, Rhodium oder Nichtedelmetalle wie beispielsweise Kupfer, Nickel, Kobalt verwendet werden.

Je nach Verfahren und der Wechselwirkung zwischen Träger und den Precursoren, bzw. den katalytisch aktiven Komponenten können die katalytisch aktiven Komponenten unterschiedlich im Trägerkorn verteilt werden.

Ein Grenzfall ist die Abscheidung der Komponenten im äußersten Randbereich des porösen Korns. Die Eindringtiefen der Komponenten in die poröse Matrix liegen dabei im Extremfall in der Größenordnung von einigen Mikrometern. Der Fachmann spricht dann auch von Schalenkatalysator, da die Komponente nur in einer Schale des porösen Materials abgeschieden vorliegt.

Ein weiterer Grenzfall ist eine Verteilung der Komponenten über das gesamte Korn. Die Eindringtiefe entspricht dabei dem Radius des Korns. Unter Anwendungen der Methoden nach dem Stand der Technik ist es möglich, zahlreiche Varianten der Abscheidung zwischen den beiden zuvor beschriebenen Grenzfällen zu erzeugen. Durch spezielle Techniken, die dem Fachmann bekannt sind, ist es bei einigen Komponenten auch möglich, die Abscheidung der Komponente ins Innere des porösen Materials zu verlagern. Dabei kann eine innere Schale erzeugt werden. In diesem Fall ist im Kern und im Randbereich des porösen Materials keine Komponente abgeschieden. Die Abscheidung kann aber auch nur im Kern erfolgen, so dass im Randbereich keine Komponente vorliegt (s. Pinna, F., Catal. Today 41 (1998) 129-137).

Beim Imprägnieren wird somit eine Komponente in eine vorhandene poröse Struktur über eine Lösung eingebracht. Nach Entfernen der mobilen Phasen liegt die eingebrachte Komponente abgeschieden auf der Oberfläche der porösen Struktur oder in den Poren der porösen Struktur vor. Beim Imprägnieren nimmt der Durchmesser des Ausgangsmaterials nicht messbar zu. Spricht der Fachmann bei imprägnierten Katalysatoren von einer dünnen äußeren Schale, meint er, dass die katalytisch aktive Komponente nur wenig in das Trägermaterial eingedrungen ist und somit nur eine dünne äußere Schale des Katalysatorträgers mit katalytisch aktiver Komponente belegt ist.

Es handelt sich dabei nicht um eine zusätzliche, separate Schicht auf dem Trägermaterial, wie sie bei dem sogenannten Coaten erreicht wird. Unter Coaten ist das Beschichten oder Umhüllen von Partikeln mit Überzugsstoffen zu verstehen. Diese Überzugsstoffe, die beim Coaten in einer oder mehreren Schichten auf der Oberfläche eines Partikels aufgetragen werden, können eine Schichtdicke von einigen Mikrometern bis in den Millimeterbereich aufweisen. Beim Coaten nimmt der Durchmesser des Ausgangsmaterials somit messbar zu.

Unter einem Schalenkatalysator versteht der Fachmann einen Trägerkatalysator bei dem die äußere Oberfläche des Trägermaterials mit einem katalytisch aktivem Material über Imprägnierverfahren belegt wurde und nicht ein mit einem Überzugsstoff beschichteten, bzw. gecoateten Katalysator.

Bei der Imprägnierung dringt die Imprägnierlösung in den Imprägnierkörper ein. Es kommt zu einer Durchdringung des Imprägnierkörpers mit der Imprägnierlösung.

Eine homogene Verteilung der katalytisch aktiven Komponente über die gesamte Trägeroberfläche kann dadurch erreicht werden, dass die Poren des Trägers vollständig mit der Imprägnierlösung gefüllt werden. Dazu kann der Träger bei Raumtemperatur mit soviel Lösung besprüht oder getränkt werden, dass nahezu alle Poren gefüllt sind. Die Tränkung kann auch über eine sogenannte Vakuumimprägnierung erfolgen, bei der der Träger zunächst evakuiert wird. Dieses Verfahren kann angewendet werden, wenn zwischen den Komponenten der Imprägnierlösung und Träger keine besondere Wechselwirkung auftritt, es hat allerdings den Nachteil, dass sehr viel Imprägnierlösung benötigt wird und das Verfahren keinen Schalenkatalysator hervorbringt.

Bei einer Wechselwirkung zwischen Träger und den Komponenten der Imprägnierlösung kann die Position der Abscheidung zum Teil gesteuert werden, so dass auch sogenannte Schalenkatalysatoren hergestellt werden können. Wird beispielsweise ein Träger zunächst mit einer alkalischen Lösung belegt und wird anschließend eine Edelmetallsalzlösung aufgesprüht, fällt das Edelmetall bei Kontakt mit der alkalischen Oberfläche als Hydroxid aus. Die Verbindung ist dadurch nicht mehr mobil und man erhält eine dünne äußere Schale. Nachteil dieses Verfahrens ist jedoch, dass die alkalische Vorimprägnierung beim Einsatz des Trägerkatalysators häufig einen störenden Einfluss hat und daher durch Wäsche entfernt werden muss.

Falls man keine Wechselwirkungseffekte ausnutzen kann oder möchte, um einen Schalenkatalysator zu erhalten, nutzt man aus, dass die Kataysatorprecursoren nur in flüssiger Phase mobil sind und beim schnellen Entfernen der flüssigen Phase abgeschieden werden. Ein schnelles Entfernen der flüssigen Phase, die häufig Wasser ist, wird bei der sogenannten Heißflammenimprägnierung erzielt.

Bei der Heißflammenimprägnierung wird der Träger, der in einer Trommel rotiert, mit einem Gasbrenner auf höhere Temperaturen beispielsweise oberhalb 100 °C gebracht. Unter kontinuierlicher Beheizung mit der Brennerflamme wird der Träger anschließend mit der Imprägnierlösung besprüht. Trifft der Lösungstropfen auf den heißen Träger dringt dieser nur solange in die Poren des Katalysatorträgers ein, bis die mobile Phase aufgrund der hohen Temperatur verdampft ist. Das geht in der Regel so schnell, dass Eindringtiefen von 100 - 200 µm erzielt werden können. Häufig weisen die geformten Trägermaterialien jedoch eine gewisse Breite in der Verteilung der Korngrößen auf. Werden solche Träger in einer Trommel heißgesprüht, ist es zwar möglich geringe Eindringtiefen zu erzielen, aber nicht jedes Partikel enthält die gleiche spezifische auf die Masse bezogene Menge an katalytisch aktiver Komponente und es kommt zu einer derart inhomogenen Verteilung der katalytischen Komponente auf den geformten Trägermaterialien, dass manche der Träger nahezu keine katalytische Komponente auf ihrer Oberfläche enthalten.

Aufgabe der vorliegenden Erfindung ist es daher, die Nachteile des Standes der Technik zumindest zu verringern und ein Verfahren zur Herstellung von Trägerkatalysatoren zur Verfügung zu stellen, dass sich durch eine geringe Eindringtiefe der Imprägnierlösung und damit der katalytischen Komponente in die geformten Trägermaterialien auszeichnet und durch eine gleichmäßige Verteilung der Imprägnierlösung auf die Oberfläche der geformten Trägermaterialien auszeichnet.

Diese Aufgabe wird gelöst durch ein Verfahren zur Herstellung von Trägerkatalysatoren umfassend die Schritte
- Bereitstellung einer Vielzahl von geformten Katalysatorträgern
- Bereitstellung einer Imprägnierlösung, die mindestens eine der folgenden Katalysatorkomponenten enthält: Precursor der katalytisch aktiven Komponente, Katalytisch aktive Komponente, Substanzen, die die katalytische Aktivität der katalytisch aktiven Komponente beeinflussen
- Aufsprühen der Imprägnierlösung auf die Katalysatorträger, dadurch gekennzeichnet, dass die Vielzahl der geformten Katalysatorträger als Schüttung in einer zylinderförmigen Trommel vorliegt,
dass die zylindrische Trommel eine horizontale Längsachse aufweist oder die Längsachse eine Schrägstellung zur Horizontalen von maximal 45° aufweist,
dass die zylindrische Trommel Gasdurchtrittsöffnungen aufweist,
dass die zylindrische Trommel während des Aufsprühens eine Drehbewegung um die Längsachse ausführt und
dass dabei ein Gasstrom durch die Gasdurchtrittsöffnungen in das Trommelinnere geführt wird und die Schüttung der geformten Katalysatorträger durchströmt.

Die porösen Katalysatorträger können die eingangs erwähnten klassische Trägermaterialien, aber auch Katalysatorzwischenstufen sein. Häufig eingesetzte klassische Katalysatorträger sind beispielsweise Al₂O₃, SiO₂, TiO₂, ZrO₂, Alumosilikate, Fällungskieselsäuren, Zeolithe oder Aktivkohle.

Weitere als Katalysatorträger einsetzbare poröse Feststoffe sind beispielsweise
- mesoporöse Materialien wie z.B. MCM-41, MCM-48, das sind mesoporöse Molekularsiebe entwickelt von Mobil Corporation (Patent Beck, J. S. U.S. Patent 5, 057, 296. 1991) oder wie z.B. SBA-15 mesoporöse Nanopartikel mit speziellen Poren entwickelt an der University Santa Barbara (Kalifornien), (Dongyuan Zhao, et al. (1998). "Triblock Copolymer Syntheses of Mesoporous Silica with Periodic 50 to 300 Angstrom Pores". Science 279 (279): 548)
- poröse Gläser, deren Herstellung beispielsweise in DE 3103751 beschrieben wird
- poröse Aluminiumphosphate beschrieben beispielsweise in US 4663139
- poröse Polymere
- poröse Nitride oder Oxynitride z.B. auf Basis von Silizium, Bor oder Kohlenstoff
- Aerogele (hochporöse Festkörper, bei denen bis zu 95 % des Volumens aus Poren bestehen.

Wie oben ausgeführt, geht es bei den in der Imprägnierlösung enthaltenen Katalysatorkomponenten nicht nur um die eigentlich katalytisch aktiven Elemente. Nicht alle Komponenten in einem Katalysator sind für die katalytische Aktivität im eigentlichen Sinn verantwortlich. Es gibt beispielsweise bei Hydrierkatalysatoren die klassischen Metalle Pd, Pt, Ni, Cu, Co, die die eigentliche Hydrieraktivität liefern, die aber ggf. nur in Kombination mit weiteren Komponenten beispielsweise des Zinks, Chroms, Ag oder Au für eine spezielle Hydrierreaktion ausreichend aktiv sind. Andere Komponenten können für die mechanische Stabilität notwendig sein, andere sind dazu da, die katalytische Aktivität zu verringern, um beispielsweise die Selektivität des Prozesses zu fördern.

Unter Katalysatorkomponenten werden alle Elemente/Verbindungen verstanden, die für den Aufbau des Katalysators in irgendeiner Weise benötigt werden. In den Precursoren sind diese Komponenten/Elemente in irgendeiner Form enthalten. Die Umwandlung der Precursoren in die letztendlich im Katalysator vorliegenden Komponente erfolgt häufig erst nach einer speziellen thermischen Behandlung (Kalzination, Reduktion) oder auch in-situ unter Reaktionsbedingungen. Eine partielle Umwandlung des Precursors kann aber auch schon im Imprägnier- oder Trocknungsschritt erfolgen. Voraussetzung bei den zur Imprägnierung eingesetzten Precursoren ist, dass diese flüssig vorliegen oder in einem fluidem Medium gelöst vorliegen. Dabei kann es sich um reale Lösungen aber auch um kolloidale Lösungen handeln. Da Katalysatoren nahezu alle Elemente des Periodensystems enthalten können, gibt es eine Vielzahl an Precursoren, die prinzipiell eingesetzt werden können. Typische Precursoren sind Salze wie beispielsweise Chloride, Nitrate, Acetate, Acetylacetonate der Edelmetalle (z.B. Pd, Pt, Ru, Rh, Ir) oder Nichtedelmetalle (z.B. Nickel, Cobalt, Kupfer, Natrium, Kalium, Barium oder Magnesium) oder Komplexe wie beispielsweise Amminkomplexe oder Hydroxokomplexe. Andere Elemente könne z.B. in Form ihrer Säuren aufgebracht werden wie beispielsweise Chromsäure, Perrheniumsäure.

Die zylindrische Trommel, in der die Katalysatorträger als Schüttung vorliegen weist bevorzugt eine Schrägstellung der Längsachse der Trommel zur Horizontalen von maximal 30°, insbesondere bevorzugt maximal 15° auf. Besonders bevorzugt weist die Längsachse der Trommel keine Schrägstellung zur Horizontalen auf.

In einer weiteren bevorzugten Ausführungsform des erfindungsgemäßen Verfahrens befinden sich an der inneren Mantelfläche der Trommel Einbauten, die als Mitnehmer für die geformten Katalysatorträger dienen und dafür sorgen, dass die Schüttung gleichmäßig über die gesamte Länge der Trommel verteilt wird.

Die Drehzahl der Trommel liegt bevorzugt im Bereich von 0,5 - 25 min⁻¹.

Die in der zylindrischen Trommel vorhandenen Gasdurchtrittsöffnungen sind in Form und Größe so gewählt, dass die Katalysatorträger in der Trommel gehalten werden.

Bevorzugt ist der durch die Gasdurchtrittsöffnungen geführte Gasstrom ein temperierter Gasstrom mit einer Temperatur zwischen 5°C und 140°C, besonders bevorzugt mit einer Temperatur zwischen 20°C und 120°C, bzw. mit einer Temperatur zwischen 50°C und 100°C.

Der temperierte Gasstrom kann durch geeignete Einrichtungen, wie z.B. Heizspiralen und ein Gebläse durch die Gasdurchtrittsöffnungen der zylindrischen Trommel und der Katalysatorträgerschüttung transportiert werden. Der Gasstrom wird dabei bevorzugt einmal durch die Katalysatorträgerschüttung geleitet, besonders bevorzugt ist eine Anordnung, bei der der Gasstrom zweimal durch die Katalysatorträgerschüttung geleitet wird.

Bevorzugt wird als Gas Luft eingesetzt. Es ist aber auch denkbar inerte Gase z.B. Stickstoff einzusetzen.

Das Aufsprühen der Imprägnierlösung auf die geformten Katalysatorträger erfolgt durch dem Fachmann bekannte Einrichtungen zum Besprühen z.B. Sprühdüsen. Bevorzugt erfolgt das Aufsprühen durch mehrere Sprühdüsen, so dass die Imprägnierlösung über die gesamte Länge der Trommel versprüht werden kann.

Nach dem erfindungsgemäßen Verfahren hergestellte Trägerkatalysatoren weisen hinsichtlich der Verteilung der Katalysatorkomponente auf dem geformten Träger überraschenderweise ein völlig anderes Bild als das, das bei der Heißsprühimprägnierung erhalten wird, auf. Im Gegensatz zur Heißflammenimprägnierung wird durch die Anwendung des erfindungsgemäßen Verfahrens eine sehr gleichmäßige Verteilung der katalytischen Komponente erreicht.

Die Vorrichtungen zur Durchführung des erfindungsgemäßen Verfahrens sind kommerziell erhältlich und dem Fachmann an sich bekannt. Diese Vorrichtungen werden jedoch nur zur Beschichtung von Kernen oder Körpern z.B. Tabletten mit einem Überzugsmittel eingesetzt. Völlig unerwartet konnte nun gezeigt werden, dass sich diese Vorrichtungen auch zur Herstellung von Trägerkatalysatoren durch ein Imprägnierverfahren eignen und dass dabei überraschenderweise eine sehr gleichmäßige Auftragung der Katalysatorkomponenten erreicht wird.

Die in der zylindrischen Trommel vorhandenen Gasdurchtrittsöffnungen ermöglichen, dass durch die Schüttung der geformten Katalysatorträger große Mengen an Gas, bzw. an temperiertem Gas geführt werden. Der erzeugte Gasstrom kann durch geeignete Mittel beim Verlassen der Trommel wiederholt durch die Schüttung geführt werden. So kann auch bei moderaten Temperaturen von 50°C bis 100°C, besonders bevorzugt bei Temperaturen von 70°C-80°C, die mobile Phase der Imprägnierlösung sehr schnell verdampft und damit sehr dünne Schalenkatalysatoren erreicht werden. Durch die Rotation der Trommel und die dadurch bedingte Umwälzung der Katalysatorträger wird die Imprägnierlösung und die darin enthaltene Katalysatorkomponente auch bei Körnern mit breiter Partikelgrößenverteilung sehr gleichmäßig auf dem Träger verteilt.

Die Eindringtiefe der katalytischen aktiven Komponente in den Katalysatorträger ist bevorzugt kleiner 200µm, besonders bevorzugt kleiner als 100 µm. Mit dem erfindungsgemäßen Verfahren sind besonders bevorzugt sehr geringe Eindringtiefen im Bereich von 20-30µm realisierbar.

Die im Stand der Technik durchgeführte Heißflammenimprägnierung in der Dragiertrommel hat den Nachteil, dass es sich hier um ein Verfahren handelt, welches offen zur Umgebung durchgeführt wird. Staub- und Abgasaustritt sind somit nicht völlig vermeidbar. Das behandelte Volumen beträgt maximal 200 1. Da die Beheizung durch einen Gasbrenner erfolgt müssen hohe Temperaturgradienten hingenommen werden. Die Temperatur an der Brennerspitze beträgt bis zu 600°C. Die Katalysatorträger rotieren in einer dicken Schicht um eine Drehachse im Zentrum der Schüttung. Die Bewegung ist größtenteils vertikal und die Aufdüsfläche relativ klein.

Die Herstellung von Trägerkatalysatoren nach der vorliegenden Erfindung erlaubt die Durchführung in geschlossener Bauweise. Bevorzugt ist die zylindrische Trommel daher in einem geschlossen Gehäuse installiert. Eine geschlossene Bauweise verhindert Geruchs- wie Staubemissionen. Trommelvolumina von bis zu 2000 1 sind bereits kommerziell erhältlich. Die Beheizung durch einen temperierten Gasstrom ist sehr materialschonend. Die Katalysatorträger rotieren in einer vergleichsweise dünnen Schicht und werden dabei bevorzugt durch geeignete Mitnehmer effektiv vermischt. Außerdem wird die gesamte Schüttungslänge durch Sprühdüsen erreicht.

Bevorzugt liegt das Verhältnis von Länge der Trommel zum Durchmesser der Trommel zwischen 0,5 und 2,0, besonders bevorzugt zwischen 0,9 und 1,6.

Die Schichtdicke der Schüttung in der Trommel sollte so gewählt werden, dass Totzonen im Inneren der Schüttung vermieden werden. Das zu imprägnierende Material rotiert in einer vergleichsweise dünnen Schicht von bevorzugt < 0,6 m und besonders bevorzugt < 0,42 m.

Das Verhältnis von maximalen Nutzvolumen und Trommelvolumen liegt bevorzugt zwischen 0,1 - 0,30, besonders bevorzugt zwischen 0,15 - 0,2.

Das Verhältnis von Segmenthöhe der Schüttung und Trommelradius liegt bevorzugt < 0,6, besonders bevorzugt < 0,45.

Durch Einstellung der Temperatur des Gasstromes und des Volumenstromes kann die Eindringtiefe der Imprägnierlösung eingestellt werden. Diese Einstellungen sind abhängig von der Größe des Trägers und durch einfache Vorversuche zu ermitteln. Typische Partikeldurchmesser liegen in der Größenordnung von 1 - 10 mm.

Die Herstellung verschiedener Katalysatortypen gelingt nach dem erfindungsgemäßen Verfahren bemerkenswert sicher, einfach und auf bequeme Weise. Das Verfahren führt besonders bei Trägersorten mit breitem Kornspektrum zu einem Produkt mit außergewöhnlich gleichmäßiger Verteilung der aktiven Komponente.

Eine geschlossene Bauweise verhindert Geruchs- wie Staubemissionen. Die Automation des Imprägnierprozesses einschliesslich Trocknung und Entleerung vereinfacht die Fertigung erheblich.

Die Reinigung geschieht sehr effizient, da die niedrige Betriebstemperatur keine festen Anbackungen, wie bei der Heißflammenimprägnierung in der Dragiertrommel üblich, zulässt

Die Imprägnierung und die Entfernung der mobilen Phase erfolgen parallel, d.h. während des Imprägnier/Trocknungsvorgangs ist im stationären Zustand der Anteil der mobilen Phase in der porösen Struktur sehr klein. Dies wird erreicht durch hohen Gasdurchsatz und/oder erhöhter Gastemperatur. Durch das schnelle Entfernen der mobilen Phase kann die in der Imprägnierlösung enthaltene Katalysatorkomponente nicht in das Korn eindringen und wird im äußersten Randbereich der porösen Struktur abgeschieden.

Die Durchströmung der Schüttung mit einem bevorzugt temperierten Gas sorgt damit bereits während der Imprägnierung für eine vorteilhafte Antrocknung. Die Fertigung von Katalysatoren mit homogener Verteilung der aktiven Komponente im Korn, bei denen das Porenvolumen << Lösungsvolumen ist, gelingt dadurch in überraschender Weise in nur einem Fertigungsschritt. Über Vakuumtränkung oder Sprühimprägnierung in der Dragiertrommel sind dagegen zwei oder sogar mehrere Imprägnierschritte mit Zwischentrocknung erforderlich.

Durch das erfindungsgemäße Verfahren kann prinzipiell auch ein Trägerkatalysator mit hohen Schalentiefen in einem Arbeitsschritt hergestellt werden, in dem man Temperatur des Gasstromes oder Volumenstrom des Gasstromes entsprechend niedriger einstellt als bei einem Schalenkatalysator mit minimaler Eindringtiefe der Imprägnierlösung und der katalytischen Komponente.

Aufgrund der deutlich niedrigeren Temperaturen, die bei dem erfindungsgemäßen Verfahren verwendet werden, ist auch das Aufbringen temperaturempfindlicher Komplexe als Schale möglich.

Unter einem Verfahren zur Herstellung eines Trägerkatalysator gemäß der vorliegenden Erfindung sind auch solche Verfahren zu verstehen, bei denen die Imprägnierung nur ein Zwischenschritt bei der Herstellung eines Trägerkatalysators ist. Das zu imprägnierende poröse Material könnte dabei zunächst über Einsatz von anderen Techniken aus verschiedenen Elementen aufgebaut worden sein. Durch die Imprägnierung können eine oder mehrere Komponenten gezielt auf der Oberfläche des porösen Grundkörpers, d.h. auf dem Katalysatorträger abgeschieden werden. So ist es z.B. denkbar die Eigenschaften eines kommerziellen Hydrierkatalysators durch nachträgliche Imprägnierung mit geeigneten Komponenten zu modifizieren. Beispielsweise Substanzen, die die Aktivität zwar senken, aber dafür die Selektivität erhöhen. Da Katalysatoren nahezu alle Elemente des Periodensystems enthalten können, kann auch die poröse Katalysatorzwischenstufe beliebig komplex sein.

Die Erfindung wird anhand der folgenden nicht limitierenden Beispiele näher erläutert:

### Es zeigen

Figur 1: kugelförmiger Trägerkatalysator Pd auf Al₂O₃, der
   a) über Heißflammenimprägnierung in der Dragiertrommel und
   b) gemäß der vorliegenden Erfindung hergestellt wurde
Figur 2: zylinderförmiger Trägerkatalysator Pd auf Al₂O₃, der a) über Heißflammenimprägnierung in Dragiertrommel und b) gemäß der vorliegenden Erfindung hergestellt wurde
Figur 3: Bruchfläche von Trägerkatalysatorpartikeln a) über Heißflammenimprägnierung in der Dragiertrommel hergestellt und b) nach dem Verfahren gemäß der vorliegenden Erfindung hergestellt

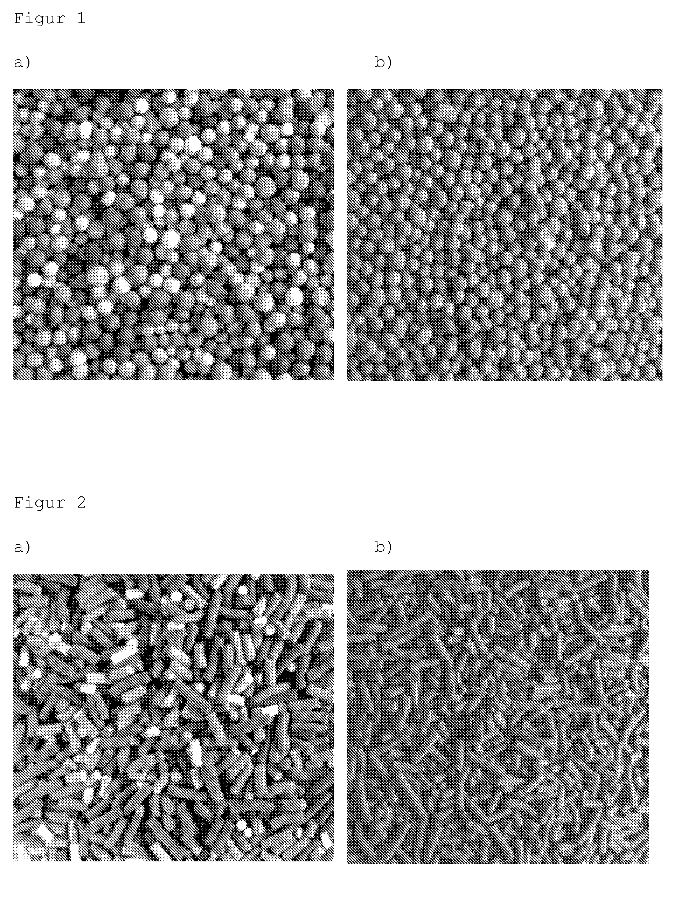

Die Imprägnierung des kugelförmigen Katalysatorträgers aus Al₂O₃ mit einer Palladiumhaltigen Imprägnierlösung führt, wie in Fig. 1a gezeigt im Heißflammenverfahren zu einer deutlich sichtbaren Ungleichverteilung der Katalysatorkomponente auf dem Katalysatorträger, bei der einzelne Partikel sogar nahezu kein Palladium enthalten. Die kugelförmigen Trägerpartikel weisen eine Verteilung hinsichtlich des Durchmessers im Bereich von 2 mm - 5 mm auf.

Die Standardheißflammenimprägnierung von Palladium/Al₂O₃-Katalysatoren in der Dragiertrommel wurde bei 105±5 °C mit einer wässrigen Palladiumnitratlösung durchgeführt. Das Trommelvolumen betrug 750 1, das Volumen der Katalysatorträgerschüttung betrug 150 1 Dazu im Vergleich in Figur 1b die Ergebnisse der Imprägnierung nach dem Verfahren der vorliegenden Erfindung, durchgeführt in einem Trommelcoater der Firma Bohle Typ BFC 5. Das Trommelvolumen betrug hierbei 50 1, das Volumen der Katalysatorträgerschüttung betrug 10 1. In der verwendeten BFC-5 Anlage werden bereits bei moderater Temperatur von 70 - 80°C äußerst scharfe, dünne und gleichmäßige Randzonen erreicht. Eine auch nur annähernd vergleichbare Verteilung konnte in der Dragiertrommel trotz Anwendung hoher Temperaturen (105±5 °C) nicht erreicht werden.

Ohne an die Theorie gebunden sein zu wollen, wird davon ausgegangen, dass sich die kugelförmigen Partikel, die in der Dragiertrommel im wesentlichen eine Vertikalbewegung durchführen, abhängig von ihrer Größe stärker nach oben, bzw. unten bewegen. Große Kugeln wandern in einer rotierenden Schüttung eher nach oben und sind daher sehr viel stärker der Imprägnierlösung ausgesetzt. Das führt dazu, dass die kleineren Kugeln stellenweise nicht mit Imprägnierlösung benetzt werden.

Die Ungleichverteilung der Katalysatorkomponente zeigt sich auch, wie in Figur 2a und 2b dargestellt, bei zylindrischen Katalysatorträgern.

Die Imprägnierung der zylindrischen Katalysatorträger durch Standardheißflammenimprägnierung (s. Fig. 2a)führt ebenfalls zu einer deutlich sichtbaren Ungleichverteilung des Palladiums auf dem Träger, wohingegen die nach dem Verfahren der vorliegenden Erfindung durchgeführte Imprägnierung wie unter Fig. 2b dargestellt wieder eine sehr gleichmäßige Verteilung der katalytisch aktiven Komponente auf dem Katalysatorträger bewirkt.

Die Standardheißflammenimprägnierung der zylindrischen Al₂O₃-Katalysatorträger in der Dragiertrommel wurde ebenfalls bei 105±5 °C mit einer wässrigen Palladiumnitratlösung durchgeführt.

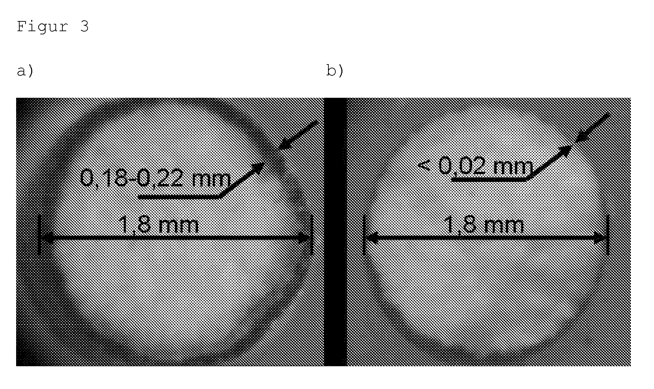

Figur 2a und 2b zeigen das äußere Erscheinungsbild und Figur 3 a und 3b die entsprechenden Querschnitte von zylindrischen Pd/Al₂O₃-Trägerkatalysatoren mit einer Palladiumbeladung von 0,5 ma. %, die unter Verwendung der gleichen Einsatzstoffe, aber unter Einsatz der Standardheißflammenimprägnierung, bzw. nach dem erfindungsgemäßen Verfahren hergestellt wurden. Figur 2a und 3a zeigen einen Katalysator, der über die Standardheißflammensprühimprägnierung bei 105±5 °C mit einer wässrigen Palladiumnitratlösung in einer Dragiertrommel präpariert wurde. Figur 2b und 3b zeigen den gleichen Träger der gemäß der vorliegenden Erfindung mit einer wässrigen Palladiumnitratlösung bei moderaten Temperaturen von 70-80 °C in einem Trommelcoater des Typs BFC-5 der Firma Bohle behandelt wurde. Eingesetzt wurden jeweils Aluminiumoxidextrudate mit einem Durchmesser von 1,8 mm und einer Länge von 3-12 mm.

Bei der Heißflammensprühimprägnierung wurde der Aluminiumoxidträger zunächst in einer rotierenden etwas schräggestellten Dragiertrommel mit Hilfe einer Brennerflamme auf 105 °C aufgeheizt. Anschließend wurde die wässrige Palladiumnitratlösung über eine Düse aufgesprüht. Während des Sprühvorgangs wurde die Beheizung der Schüttung mit der Brennerflamme fortgesetzt. Die Sprühung erfolgte an einer anderen Position auf der Oberfläche der rotierenden Schüttung, als die Beheizung mit der Flamme. Die pro Zeiteinheit aufgesprühte Palladiumnitratmenge und die über den Brenner eingebrachte Wärmemenge wurden so eingestellt, dass die Temperatur in der Schüttung bei 105±5 °C bis zum Ende der Sprühung gehalten wurde. Nach vollendeter Sprühung wurde der Katalysator in der rotierenden Trommel abgekühlt. Anschließend wurde der Katalysator in einem Reduktionsofen in der Gasphase reduziert.

Bei der Imprägnierung gemäß der vorliegenden Erfindung wurde der Aluminiumoxidträger zunächst in der rotierenden zylindrischen Trommel auf 70 - 80 °C aufgeheizt. Das Aufheizen der Schüttung erfolgte durch einen vorgewärmten Luftstrom, der über die Gasdurchtrittsöffnungen der Trommel durch die Schüttung geleitet wird. Nach Erreichen der 70 - 80 °C wurde die Palladiumnitratlösung aufgesprüht. Während des Sprühens wurde weiterhin vorgewärmte Luft durch die Schüttung geleitet und die Temperatur bei 70 - 80 °C konstant gehalten. Nach vollendeter Imprägnierung wurde der Katalysator in der rotierenden Trommel abgekühlt. Anschließend wurde der Katalysator in einem Reduktionsofen in der Gasphase reduziert.

Die Standardheißflammensprühimprägnierung von Palladium/Al₂O₃-Katalysatoren in der Dragiertrommel (Figur 2a) führt zu einer ungleichmäßigen Verteilung des Palladiums, bei der einzelne Partikel sogar nahezu kein Palladium enthalten. Dagegen ist eine nahezu einheitliche Verteilung des Palladiums bei dem Verfahren gemäß der vorliegenden Erfindung, durchgeführt in einem Trommelcoater der Firma Bohle, Typ BFC 5 (Figur 2b), zu beobachten.

Ein Vergleich der Eindringtiefen bei der Herstellung von Pd/Al₂O₃-Extrudaten zeigt die Figur 3. Die dunkle Färbung im Randbereich des Katalysators wird durch das in das Extrudat eingedrungene Palladium hervorgerufen. Durch Ausmessen der Breite der dunklen Randzone mit Hilfe eines Lichtmikroskops kann die Eindringtiefe des Edelmetalls bestimmt werden. Figur 3a und b zeigt die Bruchflächen von imprägnierten Partikeln, wobei die in Figur 3a gezeigten Partikel, die über Standardheißflammenimprägnierung hergestellt wurden, eine hohe Eindringtiefe der Katalysatorkomponente und daran anschließend eine Verlaufszone zeigen. Diese breitere Schale im Bereich von 0,1 - 0,2 mm mit Verlaufszone ist typisch für die Flammenimprägnierung in der Dragiertrommel.

Die in Figur 3b gezeigte Bruchfläche eines Trägerkatalysatorpartikels, hergestellt nach dem Verfahren gemäß der vorliegenden Erfindung, zeichnet sich durch eine viel geringere Eindringtiefe (Schalentiefe)der Katalysatorkomponente aus. Hier wird eine sehr dünne Schale mit einheitlichen Eindringtiefen von < 0,02 mm erzielt. Für das Verfahren gemäß der vorliegenden Erfindung wird daher viel weniger aktive Komponente benötigt.

## Patentansprüche

1. Verfahren zur Herstellung von Trägerkatalysatoren umfassend die Schritte
- Bereitstellung einer Vielzahl von geformten Katalysatorträgern
- Bereitstellung einer Imprägnierlösung, die mindestens eine der folgenden Katalysatorkomponenten enthält: Precursor der katalytisch aktiven Komponente; Katalytisch aktive Komponente; Substanzen, die die katalytische Aktivität der katalytisch aktiven Komponente beeinflussen
- Aufsprühen der Imprägnierlösung auf die Katalysatorträger,
**dadurch gekennzeichnet, dass** die Vielzahl der geformten Katalysatorträger als Schüttung in einer zylinderförmigen Trommel vorliegt,
dass die zylindrische Trommel eine horizontale Längsachse aufweist oder die Längsachse eine Schrägstellung zur Horizontalen von maximal 45° aufweist,
dass die zylindrische Trommel Gasdurchtrittsöffnungen aufweist,
dass die zylindrische Trommel während des Aufsprühens eine Drehbewegung um die Längsachse ausführt und dass dabei ein Gasstrom durch die Gasdurchtrittsöffnungen in das Trommelinnere geführt wird und die Schüttung der geformten Katalysatorträger durchströmt.

2. Verfahren gemäß Anspruch 1, **dadurch gekennzeichnet, dass** der Gasstrom temperiert ist und eine Temperatur zwischen 5°C und 140°C aufweist.

3. Verfahren gemäß Anspruch 1, **dadurch gekennzeichnet, dass** der temperierte Gasstrom Luft ist.

4. Verfahren gemäß Anspruch 1, **dadurch gekennzeichnet, dass** die geformten Katalysatorträger ausgewählt sind aus der Gruppe AL₂O₃, TiO₂, SiO₂ oder Aktivkohle und dass die Imprägnierlösung ein Edelmetallsalz enthält.
